# EUROPÄISCHE PATENTSCHRIFT

(11) **EP 3 571 038 B1**
(45) Veröffentlichungstag und Bekanntmachung des Hinweises auf die Patenterteilung: **13.07.2022**
(21) Anmeldenummer: 18700590.5
(22) Anmeldetag: 17.01.2018
(51) Int. Cl.: B29C 64/245, B33Y 30/00, B22F 3/105, B22F 12/00

(54) **SYSTEM UND VERFAHREN ZUM HERSTELLEN EINES DREIDIMENSIONALEN OBJEKTS**
SYSTEM AND METHOD FOR THE PRODUCTION OF A THREE-DIMENSIONAL OBJECT
SYSTÈME ET PROCÉDÉ POUR PRODUIRE UN OBJET TRIDIMENSIONNEL

(30) Priorität: 17.01.2017 DE 102017100851; 30.03.2017 DE 102017106874
(43) Veröffentlichungstag der Anmeldung: 27.11.2019
(73) Patentinhaber: Schultheiss GmbH, 71296 Heimsheim (DE)
(72) Erfinder: SCHULTHEISS, Andreas, 75417 Mühlacker (DE); GEITNER, Andreas, 71229 Leonberg (DE)
(74) Vertreter: Hoeger, Stellrecht & Partner Patentanwälte mbB
(86) Internationale Anmeldenummer: PCT/EP2018/051072
(87) Internationale Veröffentlichungsnummer: WO 2018/134228

(56) Entgegenhaltungen:
- EP-A1- 2 502 730
- DE-A1-102012 011 218
- DE-U1- 29 907 262

## Beschreibung

Die Offenbarung betrifft ein System zum Herstellen eines dreidimensionalen Objekts durch Verfestigen, insbesondere schichtweise oder kontinuierlich, eines unter Einwirkung von Strahlung verfestigbaren Materials, welches System eine Vorrichtung zum Herstellen eines dreidimensionalen Objekts durch Verfestigen, insbesondere schichtweise oder kontinuierlich, eines unter Einwirkung von Strahlung verfestigbaren Materials umfasst, welches System eine Trägereinrichtung zum Halten des aus dem verfestigbaren Material verfestigten dreidimensionalen Objekts umfasst, wobei die Trägereinrichtung und/ oder ein Teil derselben einerseits und die Vorrichtung andererseits miteinander lösbar verbindbar ausgebildet sind, insbesondere zum Trennen nach dem Ausbilden des verfestigten dreidimensionalen Objekts, wobei die Trägereinrichtung einen Trägergrundkörper und mindestens ein Trägerelement umfasst und wobei der Trägergrundkörper und das mindestens eine Trägerelement miteinander lösbar verbindbar ausgebildet sind, wobei die Trägereinrichtung eine Trägerfläche definiert, auf welcher das verfestigte dreidimensionale Objekt gehalten ist, und wobei das mindestens eine Trägerelement die Trägerfläche definiert.

Ferner betrifft die Offenbarung ein Verfahren zum Herstellen eines dreidimensionalen Objekts durch Verfestigen, insbesondere schichtweise oder kontinuierlich, eines unter Einwirkung von Strahlung verfestigbaren Materials, bei welchem Verfahren das aus dem verfestigbaren Material verfestigte dreidimensionale Objekt auf einer Trägereinrichtung gehalten wird, wobei das verfestigte dreidimensionale Objekt zum Aushärten nachverfestigt wird, insbesondere durch Beaufschlagung mit elektromagnetischer Strahlung.

Systeme und Verfahren der eingangs beschriebenen Art sind in den letzten Jahren in zahlreichen Varianten entwickelt worden. Sie stehen als sogenannte 3D-Drucker zur Verfügung und dienen zum Herstellen unterschiedlichster dreidimensionaler Objekte, insbesondere aus Kunststoffen.

Da beim Herstellen der dreidimensionalen Objekte durch schichtweises oder kontinuierliches Verfestigen des verfestigbaren Materials unter Einwirkung von Strahlung das verfestigbare Material nicht immer hinreichend dauerhaft verfestigt ist, ist in der Regel eine Nachverfestigung, insbesondere durch Nachbelichtung, erforderlich. Wird als verfestigbares Material ein flüssiger, polymerisierbarer Kunststoff verwendet, können insbesondere Bereiche im Inneren des Objekts noch nicht hinreichend polymerisiert sein. Eine Nachpolymerisation ist daher fast immer erforderlich.

Ein Problem bei der Nachverfestigung des dreidimensionalen Objekts, insbesondere durch Bestrahlung, ist eine mögliche Verformung desselben. Dies ist insbesondere unerwünscht, insbesondere bei Objekten, bei denen es darauf ankommt, äußere Abmessungen hochpräzise zu realisieren.

Aus der DE 10 2012 011 218 A1 ist eine Vorrichtung zur Herstellung dreidimensionaler Objekte durch sukzessives Verfestigen von Schichten eines Baumaterials bekannt. In der DE 299 07 262 U1 ist eine Vorrichtung zum Herstellen eines dreidimensionalen Objekts mittels Rapid Prototyping beschrieben. Vorrichtungen und Verfahren zum Herstellen eines Bauteils in Schichtbauweise sind in der EP 2 502 730 A1 offenbart.

Es ist daher eine Aufgabe der vorliegenden Erfindung, ein System sowie ein Verfahren der eingangs beschriebenen Art so zu verbessern, dass dreidimensionale Objekte hochpräzise ausgebildet werden können.

Diese Aufgabe wird bei einem System der eingangs beschriebenen Art erfindungsgemäß dadurch gelöst, dass das mindestens eine Trägerelement in Form einer flachen C-förmigen Platte ausgebildet ist. Die Erfindung wird durch Hauptanspruch 1 definiert.

Ein System der eingangs beschriebenen Art in der vorgeschlagenen Weise weiterzubilden ermöglicht es insbesondere, die Trägereinrichtung und/oder einen Teil derselben von der Vorrichtung zu lösen, wenn das dreidimensionale Objekt verfestigt ist. Zum Nachverfestigen, beispielsweise durch Nachbelichten, kann das dreidimensionale Objekt dann jedoch auf der Trägereinrichtung und/oder einem Teil derselben verbleiben. Dadurch wird das dreidimensionale Objekt beim Nachverfestigen durch Nachbelichtung beziehungsweise Nachpolymerisation in definierter Weise gehalten und gestützt und kann sich dadurch im Vergleich zu bisherigen Vorgehensweisen nicht oder nur vernachlässigbar wenig verformen. Auf diese Weise lassen sich dreidimensionale Objekte mit deutlich verbesserter Präzision herstellen, insbesondere mit hochgenauen Abmessungen. Insbesondere in der Dentaltechnik können so einzelne Zähne, Brücken oder Abdruckformen hochpräzise hergestellt werden, beispielsweise aus 3D-Daten eines Patienten, die durch entsprechende bildgebende Verfahren bereitgestellt werden können. Vorteilhaft ist es, dass die Trägereinrichtung einen Trägergrundkörper und mindestens ein Trägerelement umfasst und dass der Trägergrundkörper und das mindestens eine Trägerelement miteinander lösbar verbindbar ausgebildet sind. Diese Weiterbildung ermöglicht es insbesondere, das verfestigte dreidimensionale Objekt mit dem mindestens einen Trägerelement, auf dem es gehalten ist, vom Trägergrundkörper zu lösen und zum Nachverfestigen auf dem mindestens einen Trägerelement zu belassen. So kann die Nachverfestigung des dreidimensionalen Objekts formstabil erreicht werden. Eine Verformung des dreidimensionalen Objekts beim Nachverfestigen kann so nur noch eingeschränkt oder gar nicht mehr auftreten. Vorteilhaft ist es, dass die Trägereinrichtung eine Trägerfläche definiert, auf welcher das verfestigte dreidimensionale Objekt gehalten ist. Die Trägerfläche kann insbesondere in mehrere Flächenbereiche unterteilt sein, die durch mehrere Trägerelemente begrenzt werden. Ferner definiert das mindestens eine Trägerelement die Trägerfläche. Insbesondere kann die Trägereinrichtung derart ausgebildet sein, dass sie mehrere dreidimensionale Objekte tragen kann und dass jedes dreidimensionale Objekt auf einem separaten Trägerelement hergestellt und gehalten ist.

Besonders kompakt ausbilden lässt sich das System, wenn das mindestens eine Trägerelement einen Teil des Trägergrundkörpers bildet. Beispielsweise kann am Trägergrundkörper eine Trägerelementausnehmung vorgesehen sein, die vom mindestens einen Trägerelement in einer Verbindungsstellung ganz oder teilweise ausgefüllt ist.

Vorzugsweise definiert der Trägergrundkörper die Trägerfläche. Insbesondere kann die Trägereinrichtung derart ausgebildet sein, dass sie mehrere dreidimensionale Objekte tragen kann und dass jedes dreidimensionale Objekt auf einem separaten Trägerelement hergestellt und gehalten ist.

Je nach Form des herzustellenden dreidimensionalen Objekts kann es vorteilhaft sein, wenn die Trägerfläche eben oder von der Trägereinrichtung weg weisend konkav oder konvex gekrümmt oder strukturiert ausgebildet ist. Eine Strukturierung kann insbesondere eine makroskopische Strukturierung sein, die Nuten oder Vertiefungen oder Durchbrechungen aufweist. Beispielsweise kann die Trägerfläche geriffelt oder gelocht ausgebildet sein.

Vorzugsweise weist die Trägerfläche mindestens eine Vertiefung oder eine Durchbrechung auf. Insbesondere kann auch eine Mehrzahl von Vertiefungen oder Durchbrechungen vorgesehen sein, die gleichmäßig, insbesondere symmetrisch, oder unregelmäßig, insbesondere stochastisch, verteilt auf der Trägerfläche angeordnet oder ausgebildet sind.

Auf einfache Weise ausbilden lässt sich eine Strukturierung der Trägerfläche, wenn die mindestens eine Vertiefung in Form einer Nut oder eines Lochs oder einer Ausnehmung ausgebildet ist. Löcher können insbesondere in Form von Bohrungen auf einfache Weise ausgebildet werden. Ausnehmungen lassen sich insbesondere in Form von Sacklöchern auf einfache Weise herstellen. Nuten können im Querschnitt insbesondere rechteckig oder trapezförmig ausgebildet werden.

Eine besonders kompakte Ausbildung des Systems lässt sich erreichen, wenn die Vorrichtung die Trägereinrichtung umfasst.

Auf einfache und sichere Weise kann das mindestens eine Trägerelement mehrfach verwendet werden, wenn das System eine Kopplungseinrichtung zum temporären Koppeln des Trägergrundkörpers und des mindestens einen Trägerelements in einer Kopplungsstellung umfasst. Dreidimensionale Objekte können so in der Kopplungsstellung durch Verfestigen hergestellt werden. Zum Nachverfestigen kann dann beispielsweise das mindestens eine Trägerelement vom Trägergrundkörper gelöst werden, so dass diese vollständig voneinander getrennt sind und eine Trennstellung definieren.

Auf einfache Weise lässt sich eine Kopplungseinrichtung ausbilden, wenn sie mindestens ein erstes Kopplungselement und mindestens ein zweites Kopplungselement umfasst, die einerseits am Trägergrundkörper und andererseits am mindestens einen Trägerelement angeordnet oder ausgebildet sind und in der Kopplungsstellung kraft- und/oder formschlüssig oder stoffschlüssig in Eingriff stehen. Insbesondere können der Trägergrundkörper und das mindestens eine Trägerelement in der Kopplungsstellung magnetisch oder durch Unterdruck aneinander gehalten sein.

Vorteilhaft ist es ferner, wenn das mindestens eine erste Kopplungselement und das mindestens eine zweite Kopplungselement in einer Entkopplungsstellung, in welcher der Trägergrundkörper und das mindestens eine Trägerelement vollständig voneinander getrennt sind, außer Eingriff stehen. So lassen sich der Trägergrundkörper und das mindestens eine Trägerelement auf einfache Weise voneinander trennen, insbesondere zum Nachverfestigen des auf dem mindestens einen Trägerelement gehaltenen dreidimensionalen Objekts sowie zum Reinigen und mehrfachen Verwenden des mindestens einen Trägerelements.

Auf besonders einfache Weise ausbilden lässt sich die Kopplungseinrichtung, wenn das mindestens eine erste Kopplungselement in Form einer Kopplungsaufnahme ausgebildet ist und wenn das mindestens eine zweite Kopplungselement in Form eines zur Kopplungsaufnahme korrespondierenden Kopplungsvorsprungs ausgebildet ist. Beispielsweise können der Kopplungsvorsprung und die Kopplungsaufnahme in der Kopplungsstellung klemmend oder rastend miteinander in Eingriff stehen.

Zum Herstellen des dreidimensionalen Objekts ist es vorteilhaft, wenn das System einen Behälter für das verfestigbare Material umfasst, wobei die Trägereinrichtung und der Behälter relativ zueinander bewegbar angeordnet oder ausgebildet sind. So kann das dreidimensionale Objekt schichtweise oder kontinuierlich ausgebildet werden durch Bestrahlen des im Behälter enthaltenen verfestigbaren Materials.

Auf einfache Weise lassen sich die Trägereinrichtung und der Behälter relativ zueinander bewegen, wenn das System eine Hebeeinrichtung zum Bewegen der Trägereinrichtung relativ zu einer Strahlungsquelle und/oder zum Behälter umfasst. Die Strahlungsquelle kann insbesondere vom System umfasst sein zum Erzeugen der Strahlung zum Verfestigen des verfestigbaren Materials.

Um gegebenenfalls die gesamte Trägereinrichtung von der Vorrichtung lösen zu können, ist es günstig, wenn das System eine Kupplungseinrichtung zum temporären Kuppeln der Hebeeinrichtung und der Trägereinrichtung in einer Kupplungsstellung umfasst. So lässt sich die Trägereinrichtung insgesamt von der Hebeeinrichtung lösen oder wieder mit dieser verbinden.

Gemäß einer bevorzugten Ausführungsform der Erfindung kann vorgesehen sein, dass die Kupplungseinrichtung mindestens ein erstes Kupplungselement und mindestens ein zweites Kupplungselement umfasst, die einerseits an der Hebeeinrichtung und andererseits an der Trägereinrichtung angeordnet oder ausgebildet sind und die in der Kupplungsstellung kraft- und/oder form- und/oder stoffschlüssig in Eingriff stehen.

Insbesondere zum Reinigen des Systems ist es vorteilhaft, wenn das mindestens eine erste Kupplungselement und das mindestens eine zweite Kupplungselement in einer Entkupplungsstellung, in welcher die Hebeeinrichtung und die Trägereinrichtung vollständig voneinander getrennt sind, außer Eingriff stehen.

Auf besonders einfache Weise ausbilden lässt sich die Kupplungseinrichtung, wenn das mindestens eine erste Kupplungselement in Form einer Kupplungsaufnahme ausgebildet ist und wenn das mindestens eine zweite Kupplungselement in Form eines zur Kupplungsaufnahme korrespondierenden Kupplungsvorsprungs ausgebildet ist.

Vorzugsweise ist die Hebeeinrichtung ausgebildet zum Anheben und Absenken der Trägereinrichtung bezogen auf die Schwerkraftrichtung. So kann insbesondere die Trägereinrichtung relativ zum Behälter parallel zur Schwerkraftrichtung bewegt werden zum Herstellen eines dreidimensionalen Objekts durch schichtweises oder kontinuierliches Verfestigen des verfestigbaren Materials.

Um gezielt Strukturen des herzustellenden dreidimensionalen Objekts verfestigen zu können, ist es günstig, wenn das System eine Belichtungseinrichtung zum Belichten, insbesondere schichtweise oder kontinuierlich, des verfestigbaren Materials durch Beaufschlagen mit Strahlung umfasst. Insbesondere kann die Belichtungseinrichtung Strahlung unterschiedlicher Intensität und unterschiedlicher Wellenlänge erzeugen oder eine Strahlungsquelle entsprechend abschwächen. Optional sind auch Maskenbelichtungen mit der Belichtungseinrichtung möglich.

Vorzugsweise umfasst die Belichtungseinrichtung eine Strahlungsquelle. Mit dieser lässt sich insbesondere elektromagnetische Strahlung auf einfache Weise erzeugen zum Verfestigen des verfestigbaren Materials.

Um gezielt Strukturen beliebiger Art und Größe aus dem verfestigbaren Material verfestigen zu können, ist es vorteilhaft, wenn die Belichtungseinrichtung eine Abbildungseinrichtung umfasst. Insbesondere können so dreidimensionale Objekte auf Basis vorhandener Daten in unterschiedlichen Größen ausgebildet werden.

Ferner kann es vorteilhaft sein, wenn die Hebeeinrichtung ausgebildet ist zum Anheben und Absenken der Belichtungseinrichtung und/oder eines Teils derselben. Insbesondere lässt sich so die Belichtungseinrichtung relativ zum Behälter mit dem darin enthaltenen verfestigbaren Material bewegen, um das dreidimensionale Objekt herzustellen.

Die eingangs gestellte Aufgabe wird ferner bei einem Verfahren der eingangs beschriebenen Art erfindungsgemäß dadurch gelöst, dass das verfestigte dreidimensionale Objekt beim Nachverfestigen mit der Trägereinrichtung und/oder einem Teil derselben gehalten wird.

Insbesondere kann das dreidimensionale Objekt am, auf oder unter der Trägereinrichtung oder einem Teil derselben gehalten werden. Wie bereits oben beschrieben, kann so beim Nachverfestigen eine Formstabilität des dreidimensionalen Objekts erhalten bleiben. Eine Verformung, insbesondere ein Verziehen, des dreidimensionalen Objekts, lässt sich so minimieren oder sogar vollständig vermeiden. Das Nachverfestigen kann insbesondere durch Nachbelichten erfolgen, beispielsweise durch Beaufschlagen mit elektromagnetischer Strahlung geeigneter Wellenlänge. Die Nachverfestigung kann insbesondere auch durch entsprechende Beaufschlagung mit Wärme erfolgen, beispielsweise durch Nachpolymerisation eines flüssigen Kunststoffausgangsmaterials, welches durch Wärme- oder Strahlungsbeaufschlagung polymerisierbar ist.

Günstig ist es, wenn eine Trägereinrichtung mit einem Trägergrundkörper und mindestens einem Trägerelement bereitgestellt wird und wenn vor dem Nachverfestigen der Trägergrundkörper und/oder das mindestens eine Trägerelement von der Trägereinrichtung getrennt werden und wenn das verfestigte dreidimensionale Objekt beim Nachverfestigen mit dem Trägergrundkörper und/oder dem mindestens einen Trägerelement gehalten wird. Auf diese Weise lässt sich ein Verformen, insbesondere ein Verziehen, des dreidimensionalen Objekts beim Nachverfestigen vermeiden, da durch den Trägergrundkörper und/oder das mindestens eine Trägerelement eine Formstabilität des dreidimensionalen Objekts erreicht oder zumindest unterstützt werden kann.

Auf einfache Weise lässt sich das dreidimensionale Objekt nachverfestigen, wenn vor dem Nachverfestigen der Trägergrundkörper und das mindestens eine Trägerelement voneinander getrennt werden und wenn das verfestigte dreidimensionale Objekt beim Nachverfestigen mit dem mindestens einen Trägerelement gehalten wird. Das dreidimensionale Objekt lässt sich so auf einfache Weise handhaben, beispielsweise von einer Vorrichtung zum Herstellen dreidimensionaler Objekte trennen und zum Nachverfestigen an einen anderen Ort bringen. Günstig ist es, wenn das mindestens eine Trägerelement nur wenig größer ist als das dreidimensionale Objekt, sodass das mindestens eine Trägerelement auf einfache Weise bewegt und gehandhabt werden kann.

Vorteilhafterweise definiert die bereitgestellte Trägereinrichtung eine Trägerfläche, auf welcher das verfestigte dreidimensionale Objekt gehalten wird. So kann das dreidimensionale Objekt mit einer großen Formstabilität verfestigt werden.

Eine besonders hohe Flexibilität bei der Durchführung des Verfahrens kann erreicht werden, wenn der Trägergrundkörper und/oder das mindestens eine Trägerelement der bereitgestellten Trägereinrichtung die Trägerfläche definieren, auf welcher das verfestigte dreidimensionale Objekt gehalten wird. So können insbesondere kleine dreidimensionale Objekt auf jeweils einem Trägerelement hergestellt und zum Nachverfestigen auf dem jeweiligen Trägerelement belassen werden. Bei großen dreidimensionalen Objekten kann der Trägergrundkörper insgesamt genutzt werden, der dann selbst wiederum ein Trägerelement für das verfestigte dreidimensionale Objekt darstellt.

Je nach Art des herzustellenden dreidimensionalen Objekts ist es günstig, wenn die Trägerfläche eben oder von der Trägereinrichtung weg weisend konkav oder konvex gekrümmt ausgebildet bereitgestellt wird. Insbesondere können auch strukturierte Trägerflächen bereitgestellt werden mit Nuten, Riffelungen, Löchern, Durchbrechungen oder andersartig geformten Ausnehmungen.

Ferner kann es vorteilhaft sein, wenn das dreidimensionale Objekt mit einer Vorrichtung zum Herstellen eines dreidimensionalen Objekts durch Verfestigen, insbesondere schichtweise oder kontinuierlich, eines unter Einwirkung von Strahlung verfestigbaren Materials ausgebildet wird, welche Vorrichtung die Trägereinrichtung umfasst. So lassen sich dreidimensionale Objekte mit besonders kompakt ausgebildeten Vorrichtungen herstellen.

Gemäß einer weiteren bevorzugten Variante des erfindungsgemäßen Verfahrens kann vorgesehen sein, dass der Trägergrundkörper und das mindestens eine Trägerelement vor dem Herstellen des dreidimensionalen Objekts durch Verfestigen, insbesondere schichtweise oder kontinuierlich, des unter Einwirkung von Strahlung verfestigbaren Materials miteinander gekoppelt werden und dass der Trägergrundkörper und das mindestens eine Trägerelement vor dem Nachverfestigen voneinander getrennt werden, wobei das dreidimensionale Objekt auf dem mindestens einen Trägerelement verbleibt. Diese vorgeschlagene Weiterbildung ermöglicht es insbesondere, das verfestigte dreidimensionale Objekt auf dem mindestens einen Trägerelement zum Nachverfestigen zu belassen, sodass das mindestens eine Trägerelement eine Form des dreidimensionalen Objekts stabilisieren und eine Verformung, beispielsweise durch Verziehen, beim Nachverfestigen vermieden werden kann.

Günstig ist es, wenn der Trägergrundkörper und das mindestens eine Trägerelement vor dem Herstellen des dreidimensionalen Objekts durch Verfestigen, insbesondere schichtweise oder kontinuierlich, des unter Einwirkung von Strahlung verfestigbaren Materials miteinander kraft- und/oder form- und/oder stoffschlüssig gekoppelt werden. Insbesondere eine definierte Kopplung des mindestens einen Trägerelements und des Trägergrundkörpers stellt sicher, dass es nicht zu Abweichungen der gewünschten Form des dreidimensionalen Objekts beim Verfestigen aus dem verfestigbaren Material kommt.

Vorzugsweise werden der Trägergrundkörper und das mindestens eine Trägerelement vor dem Nachverfestigen vollständig voneinander getrennt. So kann das hergestellte dreidimensionale Objekt auf einfache Weise mit dem mindestens einen Trägerelement gehandhabt werden, beispielsweise um es in eine Vorrichtung zum Nachverfestigen einzusetzen.

Günstig ist es, wenn das verfestigte dreidimensionale Objekt zum Nachverfestigen nachbelichtet wird durch Beaufschlagen mit UV-Strahlung. Beispielsweise kann so ein durch UV-Strahlung aushärtender oder polymerisierender Kunststoff auf einfache Weise nachverfestigt werden.

Auf einfache Weise lässt sich das dreidimensionale Objekt nachverfestigen, wenn es mit einer Nachbelichtungsvorrichtung nachverfestigt wird. Beispielsweise kann das dreidimensionale Objekt mit der Nachbelichtungsvorrichtung mit elektromagnetischer Strahlung beaufschlagt werden.

Günstigerweise werden der Trägergrundkörper und/oder das mindestens eine Trägerelement vor dem Nachverfestigen mit der Nachbelichtungsvorrichtung in Eingriff gebracht oder in diese eingesetzt. Dies erfolgt mit dem Trägergrundkörper und/oder dem mindestens einen Trägerelement, je nachdem, wie groß das dreidimensionale Objekt ist.

Die eingangs gestellte Aufgabe wird ferner gelöst durch die Verwendung eines der oben beschriebenen Systeme zum Herstellen eines dreidimensionalen Objekts zur Durchführung eines der oben beschriebenen Verfahren zum Herstellen eines dreidimensionalen Objekts.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines Systems zum Herstellen eines dreidimensionalen Objekts;
- Figur 2:: eine schematische perspektivische Darstellung eines Teils des Systems zum Herstellen eines dreidimensionalen Objekts;
- Figur 3:: eine schematische Schnittansicht eines Ausführungsbeispiels einer Trägereinrichtung eines Systems zum Herstellen eines dreidimensionalen Objekts;
- Figur 4:: eine Ansicht ähnlich Figur 3 eines zweiten Ausführungsbeispiels einer Trägereinrichtung;
- Figur 5:: eine schematische Schnittansicht eines weiteren Ausführungsbeispiels eines Trägerelements;
- Figur 6:: eine Schnittansicht eines weiteren Ausführungsbeispiels eines Trägerelements;
- Figur 7:: eine Schnittansicht eines weiteren Ausführungsbeispiels eines Trägerelements;
- Figur 8:: eine Schnittansicht eines weiteren Ausführungsbeispiels eines Trägerelements;
- Figur 9:: eine Schnittansicht eines weiteren Ausführungsbeispiels eines Trägerelements;
- Figur 10:: eine Draufsicht auf eine Trägereinrichtung mit einem Grundkörper und zwei Trägerelementen mit darauf verfestigten dreidimensionalen Objekten; und

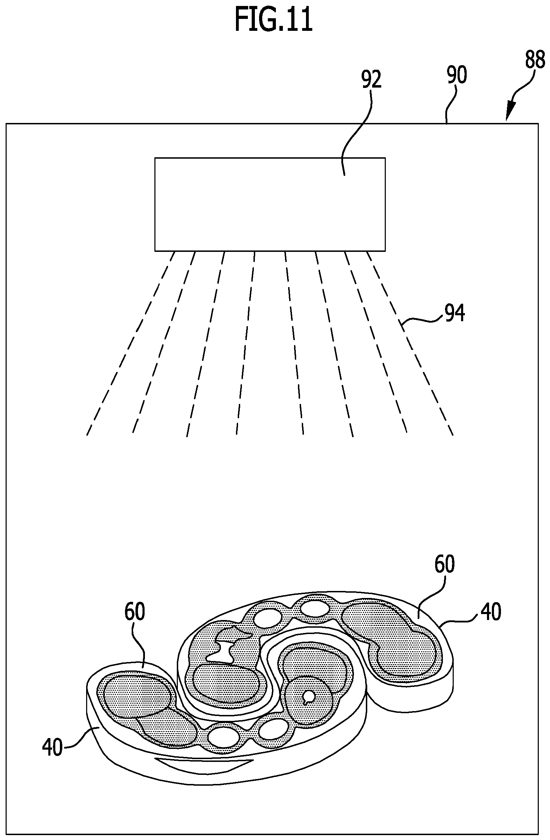

- Figur 11:: eine schematische perspektivische Darstellung einer Nachverfestigungsvorrichtung mit zwei darin angeordneten Trägerelementen mit dreidimensionalen Objekten beim Nachverfestigen.

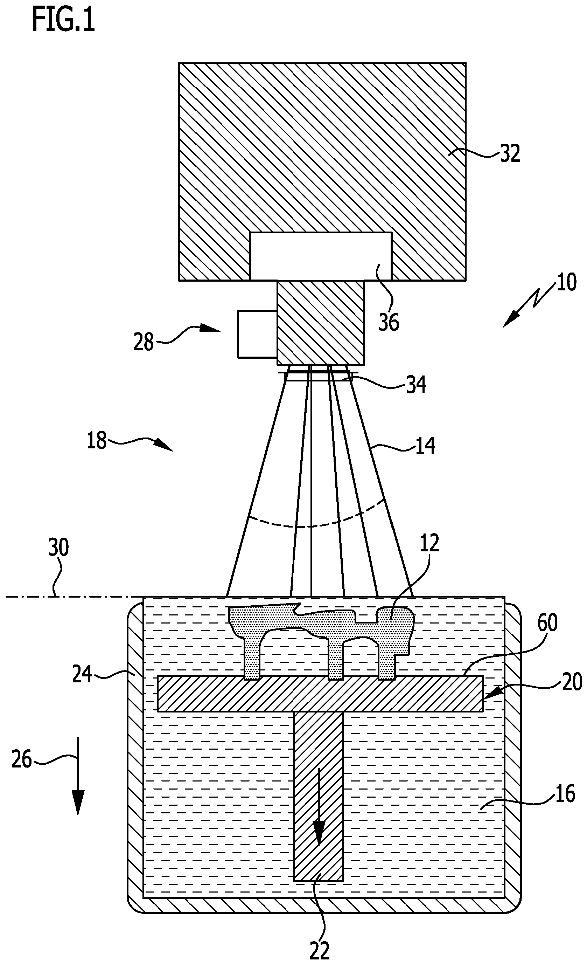

In Figur 1 ist schematisch ein System 10 zum Herstellen eines dreidimensionalen Objekts 12 durch Verfestigen, insbesondere schichtweise oder kontinuierlich, eines unter Einwirkung von Strahlung 14 verfestigbaren Materials 16 dargestellt.

Das System 10 umfasst insbesondere eine Vorrichtung 18 zum Herstellen des dreidimensionalen Objekts 12 durch Verfestigen des Materials 16 unter Einwirkung von Strahlung 14. Das Verfestigen kann insbesondere schichtweise oder kontinuierlich erfolgen.

Das System 10 umfasst eine Trägereinrichtung 20 zum Halten des aus dem verfestigbaren Materials 16 verfestigten dreidimensionalen Objekts 12.

Die Trägereinrichtung 20 ist mit einer Hebeeinrichtung 22 verbunden. Insbesondere kann sie temporär mit der Hebeeinrichtung 22 in einer Kupplungsstellung gekuppelt sein.

Das verfestigbare Material 16 ist in einem Behälter 24 enthalten. Die Hebeeinrichtung 22 ist ausgebildet zum Bewegen der Trägereinrichtung 20 und des Behälters 24 relativ zueinander.

Insbesondere kann die Hebeeinrichtung 22 ausgebildet sein, um die Trägereinrichtung 20 und den Behälter 24 relativ zueinander in einer Richtung parallel zur durch den Pfeil 26 definierten Schwerkraftrichtung zu bewegen.

Das System 10 kann ferner eine Belichtungseinrichtung 28 zum Belichten des befestigbaren Materials 16 durch Beaufschlagen mit Strahlung 14 umfassen. Insbesondere kann eine Belichtung des verfestigbaren Materials 16 in einer Bild-/Bauebene 30 erfolgen, in die ein Schichtbild einer Schicht definierter Dicke des herzustellenden Objekts 12 abgebildet wird.

Die Belichtungseinrichtung 28 kann insbesondere eine Strahlungsquelle 32 umfassen sowie eine Abbildungseinrichtung 34, um beispielsweise ein mit einer Belichtungsmaske 36 vorgebbares Schichtbild in die Bild-/Bauebene 30 abzubilden.

Das verfestigbare Material 16 wird so lange in der Bild-/Bauebene 30 mit Strahlung 14 beaufschlagt, bis eine Schicht oder ein Teil einer Schicht des dreidimensionalen Objekts 12 ausgehärtet ist.

Beispielsweise kann das verfestigbare Material 16 in Form eines flüssigen Kunststoffpolymers hergestellt werden, beispielsweise ein polymerisierbares Harz, welches durch Beaufschlagen mit elektromagnetischer Strahlung, insbesondere UV-Strahlung, polymerisiert und dadurch verfestigt wird.

Die Ausbildung des Objekts 12 kann auch kontinuierlich erfolgen, indem die Trägereinrichtung 20 kontinuierlich und nicht schichtweise beziehungsweise schrittweise von der Bild-/Bauebene 30 weg bewegt wird.

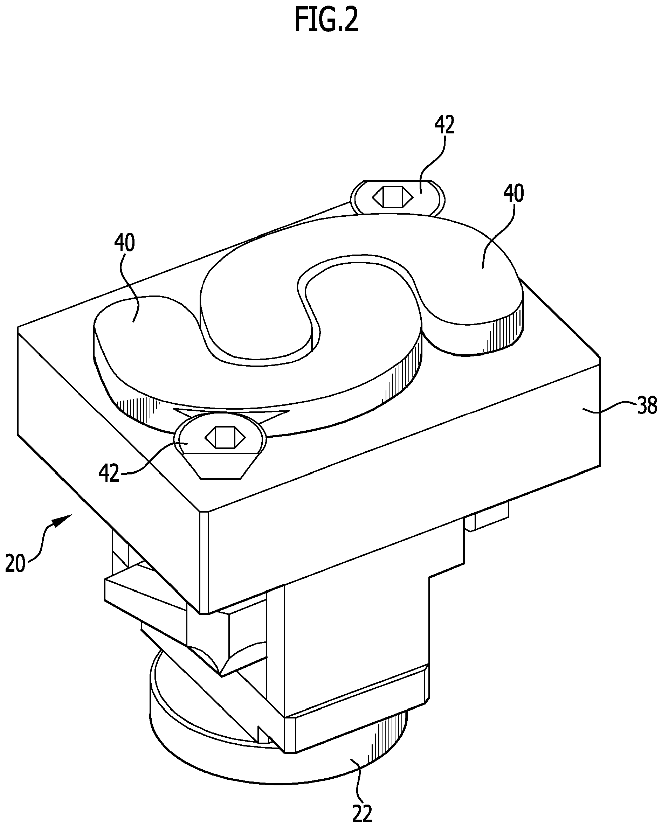

In Figur 2 ist ein Teil des Systems 10 schematisch dargestellt. Mit der Hebeeinrichtung 22 verbunden ist die Trägereinrichtung 20.

Die Trägereinrichtung 20 umfasst einen Trägergrundkörper 38 und mindestens ein Trägerelement 40.

Der Trägergrundkörper 38 kann beispielsweise mit zwei Befestigungselementen 42 in Form von Befestigungsschrauben an der Trägereinrichtung 20 befestigt sein. Durch Lösen der Befestigungselemente 42 kann der Trägergrundkörper 38 insgesamt von der Trägereinrichtung 20 und damit von der Vorrichtung 18 getrennt werden.

Die beiden Trägerelemente 40 sind jeweils in Form flacher C-förmiger, ineinander greifender Platten ausgebildet (Figur 2).

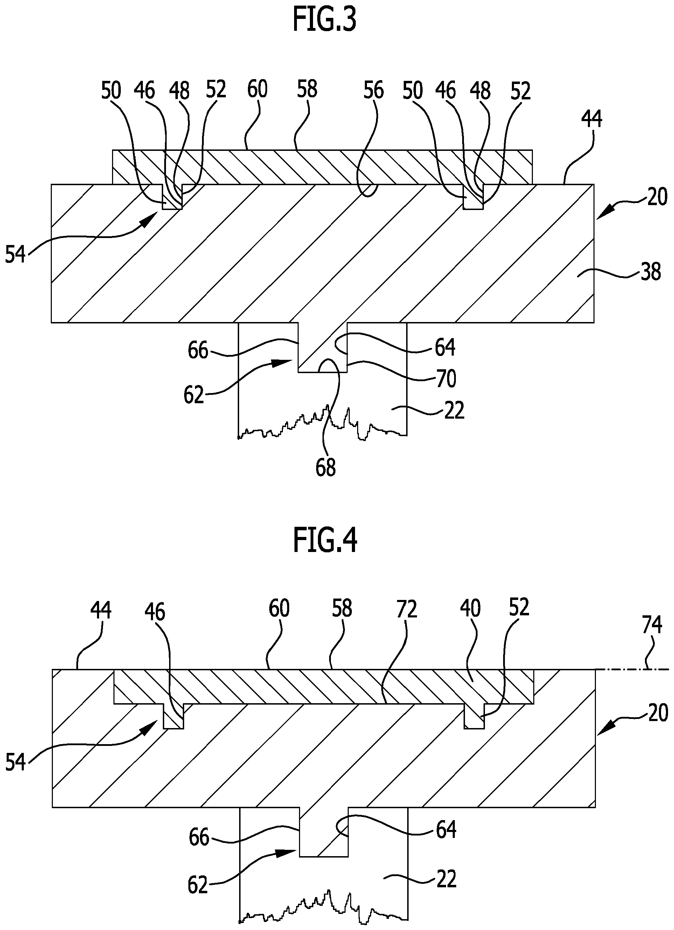

Die Trägereinrichtung 20 ist in einer abgewandelten Form schematisch in Figur 3 dargestellt. Der insbesondere quaderförmige Trägergrundkörper 38 definiert eine Oberseite 44, in der erste Kopplungselemente 46 in Form von Kopplungsaufnahmen 48 ausgebildet sind. Diese sind in Figur 3 beispielhaft eingezeichnet. Sie dienen zum Aufnehmen von korrespondierenden, vom Trägerelement 40 an einer Unterseite 56 desselben abstehenden Kopplungsvorsprüngen 50, die zweite Kopplungselemente 52 bilden.

Die miteinander zusammenwirkenden ersten und zweiten Kopplungselemente 46 und 52 definieren eine Kopplungseinrichtung 54 zum temporären Koppeln des Trägergrundkörpers 38 und des mindestens einen Trägerelements 40 in einer Kopplungsstellung, wie sie schematisch in den Figuren 2 bis 4 dargestellt ist.

Das Trägerelement 40 liegt mit seiner Unterseite 56 flächig auf der Oberseite 44 an. Eine Oberseite 58 des Trägerelements 40 definiert eine Trägerfläche 60, auf der das verfestigte Objekt 12 gehalten werden kann.

Die ersten und zweiten Kopplungselemente 46 und 52 sind insbesondere derart ausgebildet, dass sie kraft- und/oder formschlüssig und/oder stoffschlüssig in der Kopplungsstellung in Eingriff stehen.

Die ersten und zweiten Kopplungselemente 46 und 52 können insbesondere vollständig außer Eingriff gebracht werden. Sie nehmen dann eine Entkopplungsstellung ein.

Das System 10 kann ferner eine Kupplungseinrichtung 62 zum temporären Kuppeln der Hebeeinrichtung 22 und der Trägereinrichtung 20 in einer Kupplungsstellung umfassen.

Die Kupplungseinrichtung 62 kann mindestens ein erstes Kupplungselement 64 und ein zu diesem korrespondierendes zweites Kupplungselement 66 umfassen, die einerseits an der Hebeeinrichtung 22 und andererseits an der Trägereinrichtung 20 angeordnet oder ausgebildet sind.

Die ersten und zweiten Kupplungselemente 64 und 66 stehen in der Kupplungsstellung kraft- und/oder form- und/oder stoffschlüssig in Eingriff.

Die ersten und zweiten Kopplungselemente 46 und 52 sowie die ersten und zweiten Kupplungselemente 64 und 66 können optional alternativ oder zusätzlich auch magnetisch oder durch Unterdruck miteinander verbunden oder zusammengehalten werden.

Das erste Kupplungselement 64 kann insbesondere in Form einer Kupplungsaufnahme 68 ausgebildet sein. Das zweite Kupplungselement 66 kann insbesondere in Form eines zur Kupplungsaufnahme korrespondierenden Kupplungsvorsprungs 70 ausgebildet sein.

Der Kupplungsvorsprung 70 und die Kupplungsaufnahme 68 können in der Kupplungsstellung kraft- und/oder form- und/oder stoffschlüssig in Eingriff stehen.

Bei dem in Figur 4 schematisch dargestellten Ausführungsbeispiel der Trägervorrichtung 20 bildet das mindestens eine Trägerelement 40 einen Teil des Trägergrundkörpers 38. Dieser weist eine Trägerelementaufnahme 72 auf, in welche das Trägerelement 40 formschlüssig eingesetzt werden kann. Zusätzlich können das Trägerelement 40 und der Trägergrundkörper 38 über eine Kupplungseinrichtung 54 mit einem oder mehreren Paaren zusammenwirkender erster und zweiter Kupplungselemente 42 und 52 gekoppelt sein.

Die Oberseite 44 des Trägergrundkörpers 38 sowie die Oberseite 58 des Trägerelements 40 bilden zusammen die Trägerfläche 60. Die Trägerfläche 60 definiert eine Trägerebene 74.

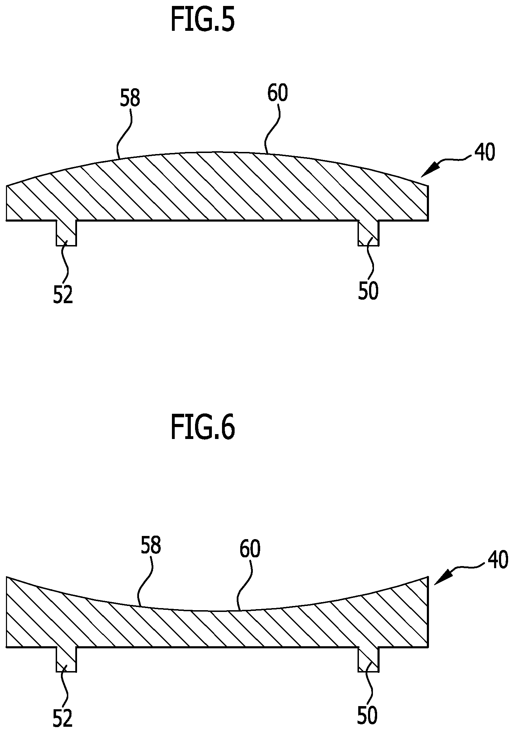

Alternativ kann, wie schematisch in Figur 5 dargestellt, das Trägerelement 40 eine vom Trägerelement 40 weg weisend konvex gekrümmte Oberseite 58 aufweisen und so eine konvex gekrümmte Trägerfläche 60 definieren.

Alternativ kann das Trägerelement 40 auch, wie schematisch in Figur 6 dargestellt, eine vom Trägerelement 40 weg weisend konkav gekrümmte Oberseite 58 aufweisen, welche eine konkav gekrümmte Trägerfläche 60 definiert.

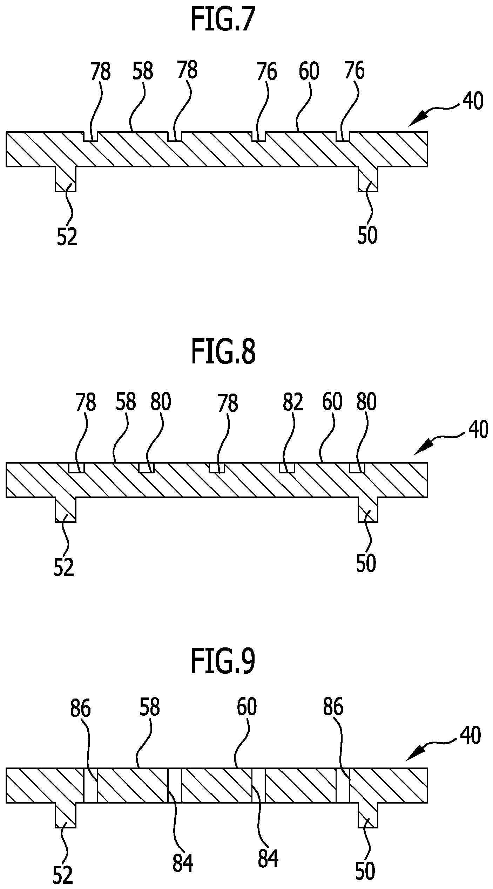

Das Trägerelement 40 kann, wie schematisch in Figur 7 dargestellt, eine strukturierte Oberseite 58 aufweisen, diese kann insbesondere mit einer Mehrzahl von Nuten 76 versehen sein. Die Nuten 76 können sowohl mikroskopisch als auch makroskopisch ausgebildet sein und Breiten im Bereich von wenigen Mikrometern bis wenigen Millimetern aufweisen.

Alternativ oder zusätzlich zu den Nuten 76 können auf der Oberseite 58 auch ein oder mehrere Vertiefungen 78 in Form von Sacklöchern 80, wie beispielhaft in Figur 8 dargestellt, ausgebildet sein.

Die in Figur 7 schematisch dargestellten Nuten 76 bilden ebenfalls Vertiefungen 78.

Die Vertiefungen 78 können insbesondere auch in Form von Ausnehmungen 82, wie schematisch in Figur 8 dargestellt, mit einem beliebigen Querschnitt parallel zur Trägerfläche 60 ausgebildet sein.

Alternativ oder zusätzlich kann das Trägerelement 40, wie beispielhaft in Figur 9 dargestellt, auch ein oder mehrere Durchbrechungen 84 aufweisen. Insbesondere können diese in Form von Bohrungen 86 ausgebildet sein.

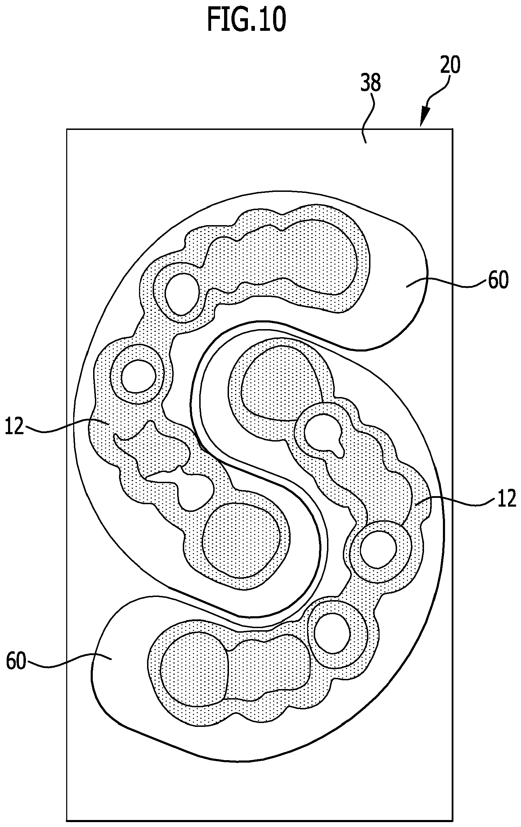

In Figur 10 ist schematisch eine Draufsicht auf eine Trägereinrichtung 20 mit zwei mit dem Trägergrundkörper 38 gekoppelten Trägerelementen 40 dargestellt. Auf jedem Trägerelement 40 ist ein dreidimensionales verfestigtes Objekt 12 gehalten.

Zum Nachverfestigen der Objekte 12 werden die Trägerelemente 40 vom Trägergrundkörper 38 getrennt, und zwar durch außer Eingriff Bringen der ersten und zweiten Kopplungselemente 46 und 52.

Die Objekte 12 können nun, gehalten auf jeweils einem Trägerelement 40, in eine Nachverfestigungseinrichtung 88 eingebracht werden. Diese kann insbesondere in Form einer Nachbelichtungseinrichtung 90 ausgebildet sein mit einer Strahlungsquelle 92 zum Erzeugen von Strahlung 94 zum Nachverfestigen der Objekte 12.

Die Strahlungsquelle 92 kann insbesondere ausgebildet sein zum Erzeugen elektromagnetischer Strahlung im ultravioletten Spektralbereich. Beispielsweise lässt sich so ein noch nicht vollständig durchpolymerisierter Kunststoff, aus dem die Objekte 12 ausgebildet sind, vollständig durchpolymerisieren.

Die Wellenlänge der Strahlung 94 wird optional an das zu verfestigende Material 16 angepasst, um hier mit minimalem Energieeinsatz eine optimale Verfestigung der Objekte 12 erreichen zu können.

Die Nachverfestigungseinrichtung 88 ist optional ein Bestandteil des Systems 10.

Dadurch, dass die Objekte 12 beim Nachverfestigen auf den Trägerelementen 40 oder optional auch auf dem Trägergrundkörper 38 gehalten sind, verformen sich diese beim Nachverfestigen nicht wie dies bislang der Fall ist, sondern bleiben formstabil und verziehen sich nicht oder deutlich weniger im Vergleich zu einer Nachverfestigung, bei der die Objekte 12 nicht auf einem Trägerelement 40 gehalten werden.

### Bezugszeichenliste

- 10: System
- 12: Objekt
- 14: Strahlung
- 16: Material
- 18: Vorrichtung
- 20: Trägereinrichtung
- 22: Hebeeinrichtung
- 24: Behälter
- 26: Pfeil
- 28: Belichtungseinrichtung
- 30: Bild-/Bauebene
- 32: Strahlungsquelle
- 34: Abbildungseinrichtung
- 36: Belichtungsmaske
- 38: Trägergrundkörper
- 40: Trägerelement
- 42: Befestigungselement
- 44: Oberseite
- 46: erstes Kopplungselement
- 48: Kopplungsaufnahme
- 50: Kopplungsvorsprung
- 52: zweites Kopplungselement
- 54: Kopplungseinrichtung
- 56: Unterseite
- 58: Oberseite
- 60: Trägerfläche
- 62: Kupplungseinrichtung
- 64: erstes Kupplungselement
- 66: zweites Kupplungselement
- 68: Kupplungsaufnahme
- 70: Kupplungsvorsprung
- 72: Trägerelementaufnahme
- 74: Trägerebene
- 76: Nut
- 78: Vertiefung
- 80: Sackloch
- 82: Ausnehmung
- 84: Durchbrechung
- 86: Bohrung
- 88: Nachverfestigungseinrichtung
- 90: Nachbelichtungseinrichtung
- 92: Strahlungsquelle
- 94: Strahlung

## Patentansprüche

1. System (10) zum Herstellen eines dreidimensionalen Objekts (12) durch Verfestigen, insbesondere schichtweise oder kontinuierlich, eines unter Einwirkung von Strahlung (14) verfestigbaren Materials (16), welches System (10) eine Vorrichtung (18) zum Herstellen eines dreidimensionalen Objekts durch Verfestigen, insbesondere schichtweise oder kontinuierlich, eines unter Einwirkung von Strahlung (14) verfestigbaren Materials (16) umfasst, welches System (10) eine Trägereinrichtung (20) zum Halten des aus dem verfestigbaren Material (16) verfestigten dreidimensionalen Objekts (12) umfasst, wobei die Trägereinrichtung (20) und/oder ein Teil derselben einerseits und die Vorrichtung (18) andererseits miteinander lösbar verbindbar ausgebildet sind, insbesondere zum Trennen nach dem Ausbilden des verfestigten dreidimensionalen Objekts (12), wobei die Trägereinrichtung einen Trägergrundkörper (38) und zwei Trägerelemente (40) umfasst und wobei der Trägergrundkörper (38) und die zwei Trägerelemente (40) miteinander lösbar verbindbar ausgebildet sind, wobei die Trägereinrichtung (20) eine Trägerfläche (60) definiert, auf welcher das verfestigte dreidimensionale Objekt (12) gehalten ist, und wobei die zwei Trägerelemente (40) die Trägerfläche (60) definieren, **dadurch gekennzeichnet, dass** die zwei Trägerelemente jeweils in Form flacher C-förmiger, ineinander greifender Platten ausgebildet sind.

2. System nach Anspruch 1, **dadurch gekennzeichnet, dass** die zwei Trägerelemente (40) einen Teil des Trägergrundkörpers (38) bilden.

3. System nach einem der voranstehenden Ansprüche, **dadurch gekennzeichnet, dass** die Trägerfläche (60) eben oder von der Trägereinrichtung (20) weg weisend konkav oder konvex gekrümmt oder strukturiert ausgebildet ist.

4. System nach einem der voranstehenden Ansprüche, **dadurch gekennzeichnet, dass** die Trägerfläche (60) mindestens eine Vertiefung (78) oder eine Durchbrechung (84) aufweist.

5. System nach Anspruch 4, **dadurch gekennzeichnet, dass** die mindestens eine Vertiefung (78) in Form einer Nut (76) oder eines Lochs oder einer Ausnehmung (82) ausgebildet ist.

6. System nach einem der voranstehenden Ansprüche, **dadurch gekennzeichnet, dass** die Vorrichtung (18) die Trägereinrichtung (20) umfasst.

7. System nach einem der voranstehenden Ansprüche, **gekennzeichnet durch** eine Kopplungseinrichtung (54) zum temporären Koppeln des Trägergrundkörpers (38) und der zwei Trägerelemente (40) in einer Kopplungsstellung.

8. System nach Anspruch 7, **dadurch gekennzeichnet, dass** die Kopplungseinrichtung mindestens ein erstes Kopplungselement (46) und mindestens ein zweites Kopplungselement (52) umfasst, die einerseits am Trägergrundkörper (38) und andererseits am Trägerelement (40) angeordnet oder ausgebildet sind und die in der Kopplungsstellung kraft- und/oder form- und/oder stoffschlüssig in Eingriff stehen, wobei insbesondere
a) das mindestens eine erste Kopplungselement (46) und das mindestens eine zweite Kopplungselement (52) in einer Entkopplungsstellung, in welcher der Trägergrundkörper (38) und das Trägerelement (40) vollständig voneinander getrennt sind, außer Eingriff stehen
und/oder
b) das mindestens eine erste Kopplungselement (46) in Form einer Kopplungsaufnahme (48) ausgebildet ist und dass das mindestens eine zweite Kopplungselement (52) in Form eines zur Kopplungsaufnahme (48) korrespondierenden Kopplungsvorsprungs (50) ausgebildet ist.

9. System nach einem der voranstehenden Ansprüche, **gekennzeichnet durch** einen Behälter (24) für das verfestigbare Material, wobei die Trägereinrichtung (20) und der Behälter (24) relativ zueinander bewegbar angeordnet oder ausgebildet sind.

10. System nach einem der voranstehenden Ansprüche, **gekennzeichnet durch** eine Hebeeinrichtung (22) zum Bewegen der Trägereinrichtung relativ zu einer Strahlungsquelle (32) und/oder zum Behälter (24).

11. System nach Anspruch 10, **dadurch gekennzeichnet, dass**
a) das System (10) eine Kupplungseinrichtung (62) umfasst zum temporären Kuppeln der Hebeeinrichtung (22) und der Trägereinrichtung (20) in einer Kupplungsstellung,
wobei insbesondere die Kupplungseinrichtung (62) mindestens ein erstes Kupplungselement (64) und mindestens ein zweites Kupplungselement (66) umfasst, die einerseits an der Hebeeinrichtung (22) und andererseits an der Trägereinrichtung (20) angeordnet oder ausgebildet sind und die in der Kupplungsstellung kraft- und/oder form- und/oder stoffschlüssig in Eingriff stehen,
wobei weiter insbesondere
a1) das mindestens eine erste Kupplungselement (64) und das mindestens eine zweite Kupplungselement (66) in einer Entkupplungsstellung, in welcher die Hebeeinrichtung (22) und die Trägereinrichtung (20) vollständig voneinander getrennt sind, außer Eingriff stehen
und/oder
a2) das mindestens eine erste Kupplungselement (64) in Form einer Kupplungsaufnahme (68) ausgebildet ist und dass das mindestens eine zweite Kupplungselement (66) in Form eines zur Kupplungsaufnahme (68) korrespondierenden Kupplungsvorsprungs (70) ausgebildet ist,
und/oder
b) die Hebeeinrichtung (22) ausgebildet ist zum Anheben und Absenken der Trägereinrichtung (20) bezogen auf die Schwerkraftrichtung (26).

12. System nach einem der voranstehenden Ansprüche, **gekennzeichnet durch** eine Belichtungseinrichtung (28) zum Belichten, insbesondere schichtweise oder kontinuierlich, des verfestigbaren Materials (16) durch Beaufschlagen mit Strahlung (14).

13. System nach Anspruch 12,
**dadurch gekennzeichnet, dass**
a) die Belichtungseinrichtung (28) eine Strahlungsquelle (32) umfasst und/oder
b) die Belichtungseinrichtung (28) eine Abbildungseinrichtung (34) umfasst
und/oder
c) die Hebeeinrichtung (22) ausgebildet ist zum Anheben und Absenken der Belichtungseinrichtung (28) und/oder eines Teils derselben.

14. System nach einem der voranstehenden Ansprüche, **dadurch gekennzeichnet, dass** das System (10) eine Nachverfestigungseinrichtung (88) umfasst zum Nachverfestigen des dreidimensionalen Objekts (12), wobei insbesondere die Nachverfestigungseinrichtung (88) Nachbelichtungseinrichtung (90) ausgebildet ist mit einer Strahlungsquelle (92) zum Erzeugen von Strahlung (94) zum Nachverfestigen des Objekts (12).

## Claims

1. System (10) for manufacturing a three-dimensional object (12) by solidifying, in particular in layers or continuously, a material (16) that is solidifiable under the action of radiation (14), which system (10) comprises a device (18) for manufacturing a three-dimensional object by solidifying, in particular in layers or continuously, a material (16) that is solidifiable under the action of radiation (14), which system (10) comprises a carrier arrangement (20) for holding the three-dimensional object (12) that has been solidified from the solidifiable material (16), wherein on the one hand the carrier arrangement (20) and/or a part thereof, and on the other the device (18), are formed such that they are detachably connectable to one another, in particular for the purpose of separation once the solidified three-dimensional object (12) has been formed, wherein the carrier arrangement comprises a carrier base body (38) and two carrier elements (40), and wherein the carrier base body (38) and the two carrier elements (40) are formed such that they are detachably connectable to one another, wherein the carrier arrangement (20) defines a carrier surface (60) on which the solidified three-dimensional object (12) is held, and wherein the two carrier elements (40) define the carrier surface (60), **characterized in that** the two carrier elements are each in the form of flat, C-shaped plates engaging in one another.

2. System in accordance with Claim 1, **characterized in that** the two carrier elements (40) form part of the carrier base body (38).

3. System in accordance with any one of the preceding Claims, **characterized in that** the carrier surface (60) takes a form that is planar or, facing away from the carrier arrangement (20), is curved concavely or convexly or takes a structured form.

4. System in accordance with any one of the preceding Claims, **characterized in that** the carrier surface (60) has at least one recess (78) or aperture (84).

5. System in accordance with Claim 4, **characterized in that** the at least one recess (78) takes the form of a groove (76) or a hole or an indentation (82).

6. System in accordance with any one of the preceding Claims, **characterized in that** the device (18) comprises the carrier arrangement (20).

7. System in accordance with any one of the preceding Claims, **characterized by** a coupling arrangement (54) for temporarily coupling the carrier base body (38) and the two carrier elements (40) in a coupled position.

8. System in accordance with Claim 7, **characterized in that** the coupling arrangement comprises at least one first coupling element (46) and at least one second coupling element (52), of which one is formed or arranged on the carrier base body (38) and the other on the carrier element (40), and in the coupled position engage with force locking and/or positive locking and/or by substance-to-substance bond, wherein in particular
a) the at least one first coupling element (46) and the at least one second coupling element (52) are disengaged in an uncoupled position in which the carrier base body (38) and the carrier element (40) are completely separated from one another
and/or
b) the at least one first coupling element (46) takes the form of a coupling receiver (48), and **in that** the at least one second coupling element (52) takes the form of a coupling projection (50) that corresponds to the coupling receiver (48).

9. System in accordance with any one of the preceding Claims, **characterized by** a container (24) for the solidifiable material, wherein the carrier arrangement (20) and the container (24) are formed or arranged movable relative to one another.

10. System in accordance with any one of the preceding Claims, **characterized by** a lifting arrangement (22) for moving the carrier arrangement relative to a radiation source (32) and/or to the container (24).

11. System in accordance with Claim 10, **characterized in that**
a) the system (10) comprises a coupling arrangement (62) for temporarily coupling the lifting arrangement (22) and the carrier arrangement (20) in a coupled position,
wherein in particular the coupling arrangement (62) comprises at least one first coupling element (64) and at least one second coupling element (66), of which one is formed or arranged on the lifting arrangement (22) and the other on the carrier arrangement (20), and which in the coupled position engage with force locking and/or positive locking and/or by substance-to-substance bond,
wherein further in particular
a1) the at least one first coupling element (64) and the at least one second coupling element (66) are disengaged in an uncoupled position in which the lifting arrangement (22) and the carrier arrangement (20) are completely separated from one another
and/or
a2) the at least one first coupling element (64) takes the form of a coupling receiver (68), and **in that** the at least one second coupling element (66) takes the form of a coupling projection (70) that corresponds to the coupling receiver (68),
and/or
b) the lifting arrangement (22) is formed for the purpose of raising and lowering the carrier arrangement (20) in relation to the direction of gravity (26).

12. System in accordance with any one of the preceding Claims, **characterized by** an exposing arrangement (28) for the purpose of exposing the solidifiable material (16) by the application of radiation (14) thereto, in particular in layers or continuously.

13. System in accordance with Claim 12, **characterized in that**
a) the exposing arrangement (28) comprises a radiation source (32) and/or
b) the exposing arrangement (28) comprises an imaging arrangement (34)
and/or
c) the lifting arrangement (22) is formed for the purpose of raising and lowering the exposing arrangement (28) and/or a part thereof.

14. System in accordance with any one of the preceding Claims, **characterized in that** the system (10) comprises a post-solidifying arrangement (88) for the purpose of post-solidifying the three-dimensional object (12), wherein in particular the post-solidifying arrangement (88) takes the form of a post-exposing arrangement (90), with a radiation source (92) for generating radiation (94) for the purpose of post-solidifying the object (12).

## Revendications

1. Système (10) pour produire un objet tridimensionnel (12) par solidification, en particulier par couches ou en continu, d'un matériau (16) pouvant être solidifié sous l'action d'un rayonnement (14), lequel système (10) comprend un dispositif (18) pour produire un objet tridimensionnel par la solidification, en particulier par couches ou en continu, d'un matériau (16) pouvant être solidifié sous l'action d'un rayonnement (14), lequel système (10) comprend un dispositif de support (20) pour maintenir l'objet tridimensionnel (12) solidifié à partir du matériau pouvant être solidifié (16), où le dispositif de support (20) et/ou une partie de celui-ci d'une part et le dispositif (18) d'autre part sont conçus pour pouvoir être reliés entre eux de manière amovible, en particulier pour la séparation après la formation de l'objet tridimensionnel solidifié (12), où le dispositif de support comprend un corps de base de support (38) et deux éléments de support (40) et où le corps de base de support (38) et les deux éléments de support (40) sont conçus pour pouvoir être reliés entre eux de manière amovible, où le dispositif de support (20) définit une surface de support (60) sur laquelle l'objet tridimensionnel solidifié (12) est maintenu, et où les deux éléments de support (40) définissent la surface de support (60), **caractérisé en ce que** les deux éléments de support sont conçus chacun sous la forme de plaques en forme de C plates qui s'emboîtent l'une dans l'autre.

2. Système selon la revendication 1, **caractérisé en ce que** les deux éléments de support (40) forment une partie du corps de base de support (38).

3. Système selon l'une des revendications précédentes, **caractérisé en ce que** la surface de support (60) est conçue plane ou incurvée de manière concave ou convexe à l'opposé du dispositif de support (20) ou structurée.

4. Système selon l'une des revendications précédentes, **caractérisé en ce que** la surface de support (60) présente au moins une dépression (78) ou une ouverture (84).

5. Système selon la revendication 4, **caractérisé en ce que** la au moins une dépression (78) est conçue sous la forme d'une rainure (76) ou d'un trou ou d'un évidement (82).

6. Système selon l'une des revendications précédentes, **caractérisé en ce que** le dispositif (18) comprend le dispositif de support (20).

7. Système selon l'une des revendications précédentes, **caractérisé par** un dispositif de couplage (54) pour le couplage temporaire du corps de base de support (38) et des deux éléments de support (40) dans une position de couplage.

8. Système selon la revendication 7, **caractérisé en ce que** le dispositif de couplage comprend au moins un premier élément de couplage (46) et au moins un deuxième élément de couplage (52), qui sont disposés ou conçus d'une part sur le corps de base de support (38) et d'autre part sur l'élément de support (40) et qui sont engagés l'un avec l'autre dans la position de couplage par assemblage de force et/ou de forme et/ou de matière,
où en particulier
a) le au moins un premier élément de couplage (46) et le au moins un deuxième élément de couplage (52) sont dégagés l'un de l'autre dans une position de découplage dans laquelle le corps de base de support (38) et l'élément de support (40) sont totalement séparés l'un de l'autre,
et/ou
b) le au moins un premier élément de couplage (46) est conçu sous la forme d'un logement de couplage (48) et **en ce que** le au moins un deuxième élément de couplage (52) est conçu sous la forme d'une saillie de couplage (50) correspondant au logement de couplage (48).

9. Système selon l'une des revendications précédentes, **caractérisé par** un récipient (24) pour le matériau pouvant être solidifié, où le dispositif de support (20) et le récipient (24) sont disposés ou conçus pour pouvoir être mobiles l'un par rapport à l'autre.

10. Système selon l'une des revendications précédentes, **caractérisé par** un dispositif de levage (22) pour déplacer le dispositif de support par rapport à une source de rayonnement (32) et/ou au récipient (24).

11. Système selon la revendication 10, **caractérisé en ce que**
a) le système (10) comprend un dispositif de couplage (62) pour le couplage temporaire du dispositif de levage (22) et du dispositif de support (20) dans une position de couplage,
où en particulier le dispositif de couplage (62) comprend au moins un premier élément de couplage (64) et au moins un deuxième élément de couplage (66), qui sont disposés ou conçus d'une part sur le dispositif de levage (22) et d'autre part sur le dispositif de support (20) et qui, dans la position de couplage, sont engagés l'un avec l'autre par assemblage de force et/ou de forme et/ou de matière,
où en particulier également
a1) le au moins un premier élément de couplage (64) et le au moins un deuxième élément de couplage (66) sont dégagés l'un de l'autre dans une position de découplage dans laquelle le dispositif de levage (22) et le dispositif de support (20) sont totalement séparés l'un de l'autre,
et/ou
a2) le au moins un premier élément de couplage (64) est conçu sous la forme d'un logement de couplage (68) et **en ce que** le au moins un deuxième élément de couplage (66) est conçu sous la forme d'une saillie de couplage (70) correspondant au logement de couplage (68),
et/ou
b) le dispositif de levage (22) est conçu pour soulever et abaisser le dispositif de support (20) par rapport à la direction de la gravité (26).

12. Système selon l'une des revendications précédentes, **caractérisé par** un dispositif d'exposition à la lumière (28) pour exposer à la lumière, en particulier par couches ou en continu, le matériau pouvant être solidifié (16) par exposition au rayonnement (14).

13. Système selon la revendication 12, **caractérisé en ce que**
a) le dispositif d'exposition à la lumière (28) comprend une source de rayonnement (32)
et/ou
c) le dispositif d'exposition à la lumière (28) comprend un dispositif d'imagerie (34)
et/ou
b) le dispositif de levage (22) est conçu pour soulever et abaisser le dispositif d'exposition à la lumière (28) et/ou une partie de celui-ci.

14. Système selon l'une des revendications précédentes, **caractérisé en ce que** le système (10) comprend un dispositif de post-solidification (88) pour la post-solidification de l'objet tridimensionnel (12),
où en particulier le dispositif de post-solidification (88) est conçu sous la forme d'un dispositif de post-exposition à la lumière (90) avec une source de rayonnement (92) pour générer un rayonnement (94) pour la post-solidification de l'objet (12).
